(19) Europäisches Patentamt / European Patent Office / Office européen des brevets

(11) **EP 2 253 114 B1**

(12) **FASCICULE DE BREVET EUROPEEN**

(45) Date de publication et mention
de la délivrance du brevet:
**22.02.2012 Bulletin 2012/08**

(21) Numéro de dépôt: **09718610.0**

(22) Date de dépôt: **23.02.2009**

(51) Int Cl.:
*H04L 27/26* *(2006.01)*

(86) Numéro de dépôt international:
**PCT/FR2009/050286**

(87) Numéro de publication internationale:
**WO 2009/112748 (17.09.2009 Gazette 2009/38)**

(54) **PROCEDES DE TRANSMISSION ET DE RECEPTION D'UN SIGNAL MULTIPORTEUSE COMPRENANT UN INTERVALLE DE GARDE, PRODUITS PROGRAMME D'ORDINATEUR, DISPOSITIFS D'EMISSION ET DE RECEPTION, ET SIGNAL CORRESPONDANTS**

VERFAHREN ZUM SENDEN UND EMPFANGEN EINES MEHRTRÄGERSIGNALS MIT VERWEILZEIT UND ENTSPRECHENDE COMPUTERSOFTWAREPRODUKTE, SENDE- UND EMPFANGSGERÄTE SOWIE SIGNAL

METHODS FOR TRANSMITTING AND RECEIVING A MULTIPLE CARRIER SIGNAL INCLUDING A HOLD INTERVAL, AND CORRESPONDING COMPUTER SOFTWARE PRODUCTS, TRANSMISSION AND RECEPTION DEVICES, AND SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **29.02.2008 FR 0851316**

(43) Date de publication de la demande:
**24.11.2010 Bulletin 2010/47**

(73) Titulaire: **FRANCE TELECOM**
**75015 Paris (FR)**

(72) Inventeurs:
• **SIOHAN, Pierre**
**F-35200 Rennes (FR)**
• **LIN, Hao**
**F-35510 Cesson Sevigne (FR)**
• **LELE, Chrislin**
**F-63173 Aubiere Cedex (FR)**

(74) Mandataire: **Guy, Marion**
**Cabinet Vidon**
**Technopôle Atalante**
**16B rue de Jouanet**
**35703 Rennes Cedex 7 (FR)**

(56) Documents cités:
**WO-A-2008/007030**

• **SIALA M ET AL: "Prototype waveform optimization for an OFDM/OQAM system with hexagonal time-frequency lattice structure" SIGNAL PROCESSING AND ITS APPLICATIONS, 2007. ISSPA 2007. 9TH INTERNATIONAL SYMPOSIUM ON, IEEE, PISCATAWAY, NJ, USA, 12 février 2007 (2007-02-12), pages 1-4, XP031280455 ISBN: 978-1-4244-0778-1**

**Description**

**1. Domaine de l'invention**

Le domaine de l'invention est celui des télécommunications, par voie filaire ou sans fil.

Plus précisément, l'invention concerne l'émission et la réception de signaux ayant subi une modulation multiporteuse.

Notamment, la technique selon l'invention est bien adaptée à la modulation et la démodulation de signaux de type OFDM suréchantillonné (en anglais « Oversampled Orthogonal Frequency Division Multiplexing ») ou OFDM/ OQAM (en anglais « OFDM / Offset Quadrature Amplitude Modulation »), pour lesquels les porteuses sont mises en forme par une fonction prototype.

L'invention trouve notamment des applications dans le domaine de la diffusion vidéo numérique terrestre selon la norme DVB-T ou DVB-T2 (en anglais « Digital Video Broadcasting - Terrestrial »).

**2. Art antérieur**

Les modulations dites « avancées », comme l'OFDM/OQAM, le BFDM/OQAM, l'OFDM suréchantillonné, ou encore le BFDM suréchantillonné, présentent de nombreux avantages par rapport aux modulations OFDM classiques.

Tout d'abord, ces modulations ont été conçues pour limiter les interférences entre symboles, sans utilisation d'un intervalle de garde dans le domaine temporel. Ces modulations permettent donc d'éviter la perte en efficacité spectrale due à l'introduction d'un intervalle de garde en OFDM.

De plus, ces modulations permettent d'introduire une forme d'onde optimisée avec les critères appropriés pour un canal de transmission donné. En effet, la mise en forme rectangulaire d'un signal réalisée par une modulation OFDM classique présente l'inconvénient d'une mauvaise localisation fréquentielle.

Des solutions alternatives ont donc été proposées, aboutissant à des systèmes de modulation à porteuses multiples dans lesquelles le signal est mis en forme par des fonctions dites prototypes, permettant d'obtenir une meilleure localisation fréquentielle.

On décrit ci-après l'art antérieur relatif aux modulations de type OFDM/OQAM (en anglais « Offset Quadrature Amplitude Modulation »), consistant à remplacer une modulation en quadrature QAM mise en oeuvre sur chacune des porteuses, par une modulation décalant d'un demi temps-symbole les parties réelles et imaginaires des symboles complexes à transmettre, pour deux fréquences porteuses successives.

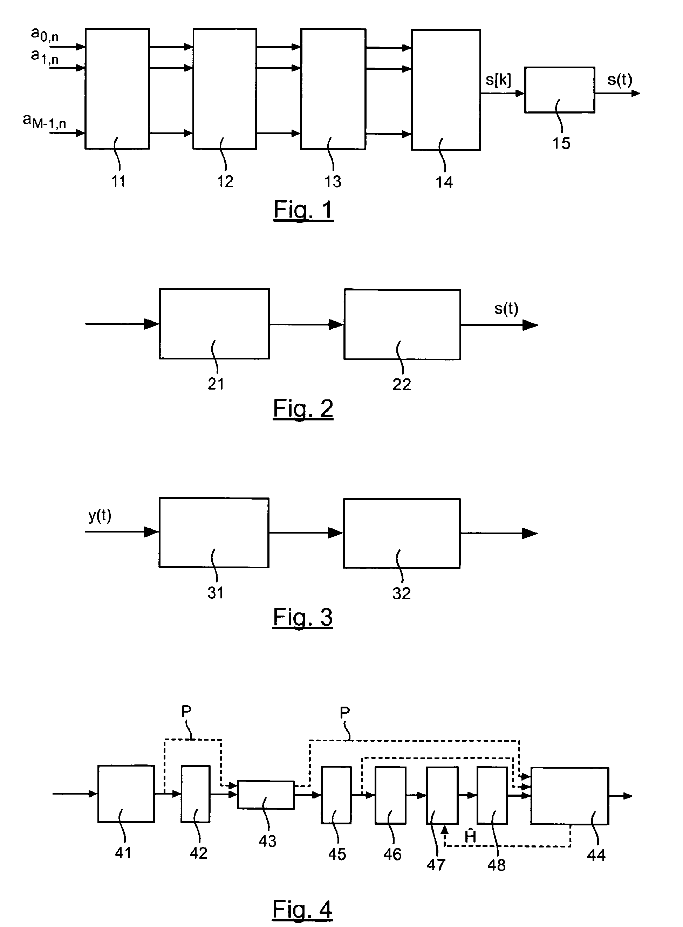

Plus précisément, la figure 1 illustre les principales étapes mises en oeuvre pour la modulation OFDM/OQAM, selon l'art antérieur.

Ainsi qu'illustré en relation avec la figure 1, le schéma de modulation comprend en entrée des symboles de données représentatifs d'un signal de données à transmettre. Ces symboles de données, notés $a_{m,n}$, portent une valeur réelle et sont, à l'instant symbole n et pour la sous-porteuse $m$, issus d'opérations préliminaires usuelles non représentées en figure 1.

Ces opérations préliminaires comprennent la transformation de données d'information initiales sous forme binaire en symboles de données. Par exemple, dans le cas d'un système non codé, on effectue une transformation dite binaire à q-aire. Dans le cas d'une modulation d'amplitude en quadrature MAQ à constellation carrée à $2^{2K}$ états, où chaque état correspond à un complexe, cette transformation est de type binaire à $2K$ aire. Ensuite, comme dans le cadre d'une transmission en OFDM/OQAM, les parties réelle et imaginaire sont traitées séparément, cela revient à avoir une constellation unidimensionnelle à $K$ états, où chaque état possible correspond à une valeur réelle. Autrement dit, les symboles de données $a_{m,n}$ sont le résultat d'une transformation binaire à $K$-aire de type PAM (en anglais « Pulse Amplitude Modulation »).

Ces symboles de données peuvent correspondre à des données utiles ou à des pilotes servant à l'estimation de canal. Lorsque ces pilotes sont insérés dans le signal OFDM/OQAM sous forme de préambule, ils sont temporellement transmis avant les données utiles. Pour un canal qui varie rapidement dans le temps, ces pilotes sont insérés en permanence dans la trame en des positions temporelles et fréquentielles connues de l'émetteur et du récepteur.

Dans le cas de l'OFDM/OQAM, les symboles de données $a_{m,n}$ subissent une pré-modulation 11. Cette étape de pré-modulation inclut sur chaque sous-porteuse une multiplication complexe qui permet de prendre en compte à la fois un terme de phase spécifique à la transformation MAQ-$2K$ vers PAM-$K$ ainsi que la longueur du filtre prototype.

Les symboles de données en sortie du bloc de pré-modulation 11 sont ensuite convertis du domaine fréquentiel vers le domaine temporel au moyen d'une transformée de Fourier inverse, encore notée IFFT 12.

Le filtrage polyphase 13 qui suit l'opération d'IFFT 12 correspond à l'implémentation du filtre prototype sous sa forme dite polyphase.

Après une conversion parallèle/série 14, on obtient en sortie du modulateur le signal OFDM/OQAM, noté $s[k]$ sous forme discrète, ou $s(t)$ sous forme continue après passage dans un convertisseur numérique analogique 15.

Plus précisément, le signal OFDM/OQAM peut se représenter en bande de base sous la forme suivante :

$$s(t) = \sum_n \sum_{m=0}^{M-1} a_{m,n} \underbrace{g(t - n\tau_0) e^{j2\pi m v_0 t} e^{j\phi_{m,n}}}_{g_{m,n}(t)},$$

avec :

- $a_{m,n}$ les symboles de données à valeur réelle à transmettre sur une sous-porteuse $m$ à l'instant $n$ ;
- $M$ le nombre de fréquences porteuses ;
- $g$ la fonction prototype utilisée par le modulateur ;

- $\tau_0 = \dfrac{1}{2} T_0$, avec $T_0$ la durée d'un symbole multiporteuse en sortie du modulateur ;

- $v_0$ l'espacement entre deux sous-porteuses adjacentes du multiplex ;
- $\phi_{m,n}$ un terme de phase choisi de manière à réaliser une alternance partie réelle-partie imaginaire permettant l'orthogonalité, ou plus généralement la biorthogonalité.

On peut noter que les étapes mises en ouvre pour la modulation OFDM suréchantillonnée sont similaires : prémodulation 11, transformation de Fourier inverse 12, filtrage polyphase 13, conversion parallèle/série 14, et conversion numérique analogique 15. Toutefois, le schéma de modulation OFDM suréchantillonné comprend en entrée des symboles de données, notés $c_{m,n}$, portant une valeur complexe. Par exemple, ces symboles de données résultent directement d'une transformation binaire à 2K aire.

Ainsi, les modulations avancées permettent de réaliser les conditions d'orthogonalité désirées avec des filtres prototypes qui ne sont pas nécessairement de forme rectangulaire, par exemple la fonction IOTA (« Isotropic Orthogonal Transform Algorithm »). Ces familles de modulation offre ainsi un choix de fonctions prototypes g plus large que la simple fonction prototype rectangulaire d'une modulation OFDM.

Ainsi, si la forme d'onde g est choisie de manière à satisfaire les conditions d'orthogonalité dites réelles, les symboles de données réelles $a_{m,n}$ transmis par l'OFDM/OQAM sur un canal parfait sont parfaitement retrouvés après démodulation, c'est-à-dire que $\hat{a}_{m,n} = a_{m,n}$.

Dans le cas d'une transmission sur un canal sélectif en fréquence et en temps, et pour un dimensionnement approprié du système OFDM/OQAM, si la fonction $g$ est bien localisée en temps et fréquence, on obtient $\hat{a}_{m,n} \approx a_{m,n}$, en supposant la mise en place d'une technique d'estimation de canal qui prenne en compte la spécificité de l'orthogonalité dite réelle.

Un inconvénient de ces modulations de type OFDM/OQAM est que la condition d'orthogonalité (ou de biorthogonalié) n'est réalisée que pour les valeurs réelles de symboles de données à transmettre, ce qui pose un problème d'estimation en réception, et notamment d'estimation du canal de transmission, dans la mesure où les symboles reçus sont complexes.

Plus précisément, au niveau de la réception, le signal OFDM/OQAM démodulé en $(m_0, n_0)$ est obtenu par

$$y_{m_0,n_0}^{(c)} = \left\langle y \middle| g_{m_0,n_0} \right\rangle, \text{ tel que :}$$

$$y_{m_0,n_0}^{(c)} = H_{m_0,n_0}^{(c)} a_{m_0,n_0} + \underbrace{\sum_{(p,q)\neq(0,0)} a_{m_0+p,n_0+q} H_{m_0,n_0}^{(c)} \left\langle g \right\rangle_{m_0+p,n_0+q}^{m_0,n_0} + D_{m_0,n_0}}_{C_{m_0,n_0}} + b_{m_0,n_0}$$

où :

- $\left\langle g \right\rangle_{m_0+p,n_0+q}^{m_0,n_0}$ correspond à un coefficient en relation directe avec la fonction d'ambiguïté de $g$,

- $C_{m_0,n_0}$ est le terme d'interférence correspondant au domaine où le canal est supposé constant ;
- $D_{m_0,n_0}$ est le terme d'interférence correspondant au domaine où le canal est différent ;

- $b_{m_0,n_0}$ est le bruit additif.

A faible rapport signal à bruit (SNR < 30 dB), le terme d'interférence $D_{m_0,n_0}$ peut être négligé dans la mesure où le bruit est prédominant. Cependant à grand SNR, ce terme d'interférence $D_{m_0,n_0}$ devient prédominant, d'où la présence d'un palier d'erreur à très fort SNR.

De plus, la présence d'un terme d'interférence imaginaire en réception empêche l'utilisation de schémas classiques de codage espace/temps, permettant d'accroître la robustesse en transmission.

## 3. Exposé de l'invention

L'invention propose une solution nouvelle qui ne présente pas l'ensemble de ces inconvénients de l'art antérieur, sous la forme d'un procédé de transmission d'un signal multiporteuse, mettant en oeuvre une étape de modulation de symboles de données représentatifs d'un signal de données à transmettre. Cette étape de modulation comprend un filtrage par au moins une fonction prototype mettant en oeuvre au moins deux coefficients de filtrage distincts, délivrant un signal modulé constitué d'une succession temporelle de symboles multiporteuses.

Selon l'invention, un tel procédé comprend une étape d'insertion d'un intervalle de garde devant au moins un symbole multiporteuse dudit signal modulé, délivrant ledit signal multiporteuse.

Ainsi, l'invention propose ainsi une nouvelle technique de transmission, selon laquelle on ajoute au moins un intervalle de garde en temps dans un signal multiporteuse, modulé selon une technique de modulation dite « avancée », distincte de l'OFDM classique.

Par exemple, la modulation mise en oeuvre est une modulation de type OFDM/OQAM, BFDM/OQAM, OFDM suréchantillonné, BFDM suréchantillonné, FMT (en anglais « filter multitone »), etc.

Une telle étape de modulation comprend une étape de filtrage polyphase, correspondant à l'implémentation d'au moins un filtre prototype sous sa forme dite polyphase, mettant en oeuvre au moins deux coefficients de filtrage distincts. Ainsi, la fonction prototype est différente de la fonction rectangulaire classiquement utilisée pour les modulations OFDM classiques, pour lesquelles tous les coefficients de filtrage sont identiques.

Du fait de l'utilisation d'une fonction prototype présentant une durée pouvant être supérieure au temps-symbole d'un symbole de données, les symboles multiporteuses du signal modulé peuvent se recouvrir au moins partiellement. Autrement dit, les symboles multiporteuses ne sont, en général, pas indépendants par tranche de temps.

Les modulations avancées utilisées selon l'invention, telles que l'OFDM/OQAM ou le BFDM/OQAM notamment, ont été conçues pour éviter la perte en efficacité spectrale due à l'introduction d'un intervalle de garde en temps. Ces modulations avancées ont donc pour principal avantage de pouvoir s'affranchir d'un intervalle de garde, et permettent donc d'éviter la perte en efficacité spectrale due à l'introduction d'un intervalle de garde en OFDM.

Il n'est donc nullement évident de rajouter un élément considéré comme un inconvénient dans la littérature dans ces techniques de modulation avancée, puisqu'elles ont justement été conçues pour s'affranchir de l'utilisation d'un intervalle de garde.

Selon un aspect particulier de l'invention, l'intervalle de garde inséré devant l'un au moins des symboles multiporteuses présente une longueur inférieure ou égale à l'étalement des retards dans un canal de transmission du signal multiporteuse.

Ainsi, l'intervalle de garde selon l'invention diffère de l'intervalle de garde classique inséré pour les modulations OFDM classiques.

En effet, on considère en OFDM classique que l'intervalle de garde doit présenter une longueur supérieure à la valeur du retard maximal apparaissant dans le canal pour que les interférences soient éliminées. Ainsi, on considère un intervalle de garde présentant une longueur pouvant aller jusqu'à ¼ de la durée du symbole multiporteuse.

Selon l'invention en revanche, l'intervalle de garde inséré devant l'un au moins des symboles multiporteuses peut présenter une longueur inférieure ou égale au plus grand retard apparaissant dans le canal. Par exemple, l'intervalle de garde peut présenter une longueur égale à seulement $\frac{1}{10}$ de la durée du symbole multiporteuse.

Selon un mode de réalisation particulier de l'invention, les symboles multiporteuses comprennent des symboles de préambule constitués de pilotes, dont la valeur et/ou l'emplacement à l'émission sont connus d'au moins un récepteur destiné à effectuer une réception dudit signal multiporteuse, et des symboles utiles. L'étape d'insertion insère alors un intervalle de garde uniquement devant l'un au moins des symboles utiles.

On rappelle qu'un symbole multiporteuse est composé d'un ensemble de sous-porteuses modulant chacune un symbole de données (à valeur complexe pour une modulation OFDM suréchantillonnée ou BFDM suréchantillonnée ou à valeur réelle pour une modulation OFDM/OQAM ou BFDM/OQAM), sur un temps symbole. En sortie du modulateur, un symbole multiporteuse correspond donc à la somme des symboles de données modulés.

Ces symboles de données peuvent être des données utiles ou des données de référence, encore appelée pilotes.

Ainsi, les symboles (multiporteuse) de préambule comprennent des pilotes uniquement, alors que les symboles (multiporteuse) utiles comprennent des données utiles, et éventuellement des pilotes, lorsque des pilotes sont répartis dans le plan temps/fréquence.

Par exemple, on considère que le signal modulé est organisé en trames, chaque trame comprenant des symboles de préambule (par exemple trois symboles multiporteuses consécutifs) et des symboles utiles. Selon ce mode de réalisation de l'invention, on insère un intervalle de garde uniquement devant les symboles utiles. Autrement dit, on n'insère pas d'intervalle de garde devant les symboles de préambule. Ainsi, une trame du signal multiporteuse selon cet exemple est composée de trois symboles de préambule, un intervalle de garde, un symbole utile, un intervalle de garde, un symbole utile, etc, un symbole utile.

De plus, la fonction prototype utilisée peut être différente pour les symboles de préambule et les symboles utiles. Par exemple, la fonction prototype utilisée pour la mise en forme des symboles de préambule peut être la fonction OptLoc, qui est une fonction optimisée selon le critère de localisation temps-fréquence. En effet, cette forme d'onde présente un intérêt pour l'estimation de canal. En revanche, la fonction prototype utilisée pour la mise en forme des symboles utiles (et donc la transmission des données) peut être la fonction IOTA.

En particulier, les symboles de préambule sont transmis préalablement à l'intervalle de garde et aux symboles utiles.

Par exemple, les symboles de préambule sont transmis à un premier instant, puis les symboles utiles accompagnés du ou des intervalles de garde sont transmis à un deuxième instant.

Selon une variante, le procédé de transmission met en oeuvre au moins deux antennes d'émission, et l'étape d'insertion d'un intervalle de garde est mise en oeuvre pour chacune des antennes d'émission.

Ainsi, l'invention trouve également des applications dans des systèmes multi-antennes, mettant en oeuvre plusieurs antennes d'émission.

Dans ce cas, le procédé de transmission selon l'invention comprend une étape de codage espace/temps appliquée audit signal modulé. Un tel codage permet notamment d'accroître la robustesse de transmission.

Par exemple, l'étape de codage espace/temps met en oeuvre une matrice de codage basée sur un schéma de codage de type Alamouti, telle que :

$$S = \begin{bmatrix} s_1 & s_2 \\ s_1' & s_2' \end{bmatrix}$$

où :

$s_1$ et $s_2$ sont les vecteurs symboles correspondant aux échantillons temporels transmis à l'instant $t$ sur une première et une deuxième antenne d'émission respectivement ;

$s_1'$ et $s_2'$ sont les vecteurs symboles correspondant aux échantillons temporels transmis à l'instant $t + T_0$ sur la première et la deuxième antenne d'émission respectivement, avec :

-

$$s_1'[k] = s_2 * [M - 1 - k] \; ;$$

-

$$s_2'[k] = -s_1 * [M - 1 - k] \; ;$$

- M le nombre de porteuses d'un symbole multiporteuse du signal multiporteuse ;
- $T_0$ la durée d'un symbole multiporteuse du signal multiporteuse ($T_0 = 2\tau_0$) ;
- k l'indice de l'échantillon temporel ; et
- * l'opérateur transposé conjugué.

Un autre mode de réalisation de l'invention concerne un dispositif d'émission d'un signal multiporteuse comprenant des moyens de modulation de symboles de données représentatifs d'un signal de données à transmettre. Ces moyens de modulation mettent en oeuvre un filtrage par au moins une fonction prototype mettant en oeuvre au moins deux coefficients de filtrage distincts, délivrant un signal modulé constitué d'une succession temporelle de symboles multiporteuses.

Selon l'invention, un tel dispositif comprend des moyens d'insertion d'un intervalle de garde devant au moins un symbole multiporteuse dudit signal modulé, délivrant ledit signal multiporteuse.

Un tel dispositif d'émission est notamment adapté à mettre en oeuvre le procédé de transmission décrit précédemment. Il s'agit par exemple d'une station de base, ou d'un émetteur d'un réseau de diffusion vidéo numérique terrestre selon la norme DVB-T ou DVB-T2. En particulier, un tel émetteur peut fonctionner en mode de diffusion SFN (« Single Frequency Network » pour « réseau à fréquence unique »), ce qui signifie que les différents émetteurs doivent être synchronisés en temps et en fréquence.

L'invention concerne également un procédé de réception d'un signal multiporteuse formé d'une succession temporelle de symboles multiporteuses, au moins un symbole multiporteuse étant précédé d'un intervalle de garde, comprenant les étapes suivantes :

- suppression dudit intervalle de garde, délivrant ledit signal modulé,
- démodulation dudit signal modulé, comprenant un filtrage par au moins une fonction prototype mettant en oeuvre au moins deux coefficients de filtrage distincts.

Un tel procédé de réception est adapté à recevoir un signal multiporteuse transmis selon le procédé de transmission décrit précédemment.

En particulier, du fait de l'insertion d'un intervalle de garde devant certains symboles multiporteuses, le signal reçu présente moins d'interférences entre symboles. Par conséquent, même à fort rapport signal à bruit, on obtient de meilleures performances.

Selon un mode de réalisation particulier, les symboles multiporteuses comprennent des symboles de préambule et des symboles utiles, et le procédé comprend les étapes suivantes :

- extraction desdits symboles de préambule, préalablement à ladite étape de suppression d'un intervalle de garde,
- estimation d'un canal de transmission dudit signal multiporteuse à partir desdits symboles de préambule,
- égalisation dudit signal modulé, préalablement à ladite étape de démodulation, tenant compte de ladite estimation du canal de transmission.

Du fait de l'extraction des symboles de préambule préalablement à la suppression de l'intervalle de garde, l'estimation de canal peut mettre en oeuvre une technique classique adaptée aux modulations avancées, comme la technique d'estimation par paire de pilotes pour une modulation OFDM/OQAM, décrite dans les demandes de brevet WO2008/007019 et WO2008/00730 déposées au nom du même Demandeur.

De plus, l'égalisation du signal modulé s'effectue avant l'étape de démodulation. Il est ainsi possible de mettre en oeuvre une égalisation de type ZF (en anglais « zero-forcing », en français « forçage à zéro ») à un coefficient, ce qui simplifie l'étape d'égalisation. De plus, l'introduction d'un intervalle de garde en émission permet d'obtenir de bonnes performances en utilisant une technique d'égalisation de type ZF à un coefficient.

En particulier, le procédé de réception selon l'invention peut mettre en oeuvre une étape de décodage espace/temps, mettant en oeuvre un traitement inverse à un codage espace/temps effectué en émission, par exemple basé sur un schéma de codage de type Alamouti.

Dans un autre mode de réalisation, l'invention concerne un dispositif de réception d'un signal multiporteuse formé d'une succession temporelle de symboles multiporteuses, au moins un symbole multiporteuse étant précédé d'un intervalle de garde, comprenant :

- des moyens de suppression dudit intervalle de garde, délivrant ledit signal modulé,
- des moyens de démodulation dudit signal modulé, comprenant un filtrage par au moins une fonction prototype mettant en oeuvre au moins deux coefficients de filtrage distincts.

Un tel dispositif de réception est notamment adapté à mettre en oeuvre le procédé de réception décrit précédemment. Il s'agit par exemple d'un terminal de type radiotéléphone, ordinateur portable, assistant personnel de type PDA (en anglais « Personal Digital Assistant »), ou d'un ré-émetteur d'un réseau de diffusion vidéo numérique.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de transmission et/ou de réception tels que décrits précédemment.

Encore un autre aspect de l'invention concerne un signal multiporteuse formé d'une succession temporelle de symboles multiporteuses, obtenus après une étape de modulation de symboles de données représentatifs d'un signal de données à transmettre, comprenant un filtrage par au moins une fonction prototype mettant en oeuvre au moins deux coefficients de filtrage distincts.

Selon l'invention, au moins un des symboles multiporteuses du signal multiporteuse est précédé d'un intervalle de garde.

On peut noter qu'un tel signal multiporteuse est différent d'un signal OFDM classique. En effet, du fait de l'utilisation d'au moins une fonction prototype qui peut être distincte de la fonction rectangulaire, le signal obtenu présente des recouvrements. Autrement dit, les symboles multiporteuses peuvent se recouvrir au moins partiellement.

Un tel signal peut notamment être émis selon le procédé de transmission décrit ci-dessus. Ce signal pourra bien sûr comporter les différentes caractéristiques relatives au procédé de transmission selon l'invention.

En particulier, les symboles multiporteuses peuvent comprendre des symboles de préambule et des symboles utiles, et uniquement l'un au moins des symboles utiles est précédé d'un intervalle de garde dans le signal multiporteuse.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, présente une chaîne classique de modulation OFDM/ OQAM ;
- la figure 2 illustre les principales étapes du schéma d'émission selon l'invention ;
- la figure 3 illustre les principales étapes du schéma de réception selon l'invention ;
- la figure 4 présente une chaîne de transmission selon un premier mode de réalisation de l'invention ;
- la figure 5 illustre la structure d'un signal multiporteuse selon le mode de réalisation de la figure 4 ;
- la figure 6 illustre une chaîne de transmission selon un deuxième mode de réalisation de l'invention ;
- la figure 7 présente une chaîne de transmission combinant les premier et deuxième modes de réalisation ;
- les figures 8 et 9 illustrent les performances de l'invention par rapport à l'art antérieur ;
- les figures 10 et 11 présentent les structures d'un dispositif d'émission et d'un dispositif de réception mettant en oeuvre les techniques de transmission et de réception selon un mode de réalisation particulier de l'invention.

## 5. Description d'un mode de réalisation de l'invention

### 5.1 Principe général

Le principe général de l'invention repose sur l'insertion d'un intervalle de garde dans le domaine temporel dans un signal à porteuses multiples modulé selon une modulation avancée, distincte de l'OFDM classique. Par exemple, le signal multiporteuse selon l'invention est de type OFDM/OQAM, BFDM/OQAM, OFDM suréchantillonné, BFDM suréchantillonné, FMT, etc.

En particulier, ces modulations dites avancées mettent en oeuvre un filtrage polyphase mettant en oeuvre au moins deux coefficients de filtrage distincts, c'est-à-dire que la fonction prototype g est différente de la forme d'onde rectangulaire. Du fait de l'utilisation d'une fonction prototype dont la durée peut être supérieure au temps d'un symbole de données, les symboles multiporteuses du signal modulé peuvent donc se recouvrir au moins partiellement. Autrement dit, les symboles multiporteuses ne sont, en général, pas indépendants par tranche de temps.

On présente en relation avec la figure 2 les principales étapes du procédé de transmission selon l'invention.

Au cours d'une étape de modulation 21, les symboles de données représentatifs d'un signal de données à transmettre sont modulés. Ces symboles de données peuvent être des données utiles ou des données de référence, encore appelées pilotes. Ils peuvent être à valeur complexe ($c_{m,n}$) pour une modulation OFDM suréchantillonnée ou BFDM suréchantillonnée, ou à valeur réelle ($a_{m,n}$) pour une modulation OFDM/OQAM ou BFDM/OQAM.

L'étape de modulation 21 comprend un filtrage par au moins une fonction prototype mettant en oeuvre au moins deux coefficients de filtrage distincts, et délivre un signal modulé constitué d'une succession temporelle de symboles multiporteuses.

Cette étape de modulation est plus précisément décrite en relation avec l'art antérieur.

Au cours d'une étape suivante 22, un intervalle de garde est inséré dans le domaine temporel devant au moins un symbole multiporteuse du signal modulé, délivrant le signal multiporteuse *s(t)*. En d'autres termes, l'intervalle de garde est inséré entre deux symboles multiporteuses du signal modulé.

Par exemple, l'intervalle de garde inséré avant un symbole multiporteuse peut être constitué d'échantillons temporels de valeur nulle ou d'une recopie des derniers échantillons temporels du symbole multiporteuse. Dans ce deuxième cas, l'intervalle de garde est encore appelé préfixe cyclique.

L'intérêt d'un préfixe cyclique est qu'il permet d'avoir un produit de convolution circulaire avec le canal, ce qui résulte dans le domaine fréquentiel à une multiplication par une matrice diagonale.

L'insertion d'un tel intervalle de garde permet d'assurer une séparation entre les différents symboles multiporteuses.

En particulier, il peut présenter une longueur inférieure ou égale à l'étalement maximal des retards dans le canal de transmission.

Le signal *s(t)* est alors véhiculé dans un canal de transmission.

La figure 3 illustre les principales étapes du procédé de réception d'un signal multiporteuse formé d'une succession temporelle de symboles multiporteuses, dans lequel au moins un symbole multiporteuse est précédé d'un intervalle de garde.

Au cours d'une première étape 31, le ou les intervalles de garde inséré(s) dans le signal multiporteuse sont supprimés. On récupère ainsi le signal modulé.

Au cours d'une étape suivante 32, le signal modulé est démodulé. Cette étape de démodulation 32 n'est pas nouvelle en soi. Elle comprend un filtrage par au moins une fonction prototype mettant en oeuvre au moins deux coefficients de filtrage distincts, et permet d'obtenir une estimation des symboles de données, notés $\hat{a}_{m,n}$ pour une modulation OFDM/OQAM ou BFDM/OQAM, ou $\hat{c}_{m,n}$ pour une modulation OFDM suréchantillonnée ou BFDM suréchantillonnée par exemple.

Le signal modulé peut être égalisé avant démodulation. Pour ce faire, on passe du domaine temporel au domaine fréquentiel après l'étape 31 de suppression de l'intervalle de garde, en effectuant une transformation de Fourier rapide. Le signal dans le domaine fréquentiel est ensuite égalisé, pour compenser les distorsions du canal, puis retourné dans le domaine temporel en effectuant une transformation inverse de Fourier rapide. Le signal égalisé dans le domaine temporel, considéré sans distorsion, est ensuite transmis au démodulateur 32 pour estimer les données transmises.

On peut noter que les procédés de transmission et/ou de réception selon l'invention peuvent être mis en oeuvre de diverses manières, notamment sous forme câblée ou sous forme logicielle.

*5.2 Description d'un mode de réalisation particulier*

On décrit ci-après un mode de réalisation particulier de l'invention, selon lequel l'étape de modulation met en oeuvre une modulation de type OFDM/OQAM. Bien entendu, d'autres modulations peuvent être utilisées, comme les modulations BFDM/OQAM, OFDM suréchantillonné, ou encore BFDM suréchantillonné.

La figure 4 illustre une chaîne de transmission selon cet exemple.

Plus précisément, en sortie du bloc 41 de modulation, le signal modulé est un signal OFDM/OQAM, constitué d'une succession temporelle de symboles multiporteuses. Chaque symbole multiporteuse est composé d'un ensemble de sous-porteuses modulant chacune un symbole de données, un symbole de données correspondant à des données utiles ou des données de référence, encore appelées pilotes. Le canal est considéré plat sur chaque sous-porteuse. Du fait de la modulation utilisée (distincte de l'OFDM classique), les symboles multiporteuses ne sont, en général, pas indépendants par tranche de temps.

En particulier, les pilotes peuvent être répartis dans le plan temps-fréquence selon un motif régulier. Ils peuvent être utilisés pour estimer le canal de transmission en mesurant une version sous-échantillonnée du canal (en anglais « scattered pilots »). On procède ensuite à une interpolation bidimensionnelle pour déterminer la valeur du canal en tout point du réseau temps-fréquence. Cette méthode est utilisée par exemple par la norme DVB-T.

Si le canal de transmission est connu a priori, l'insertion de pilotes n'est pas nécessaire, et les symbole multiporteuses ne comprennent que des symboles de données correspondant à des données utiles.

Selon une variante, au moins un symbole multiporteuse est composé d'un ensemble de sous-porteuses modulant chacune un pilote. Ainsi, ces symboles multiporteuse de préambule comprennent des pilotes uniquement, alors que les symboles multiporteuse utiles comprennent des données utiles, et éventuellement des pilotes, lorsque des pilotes sont répartis dans le plan temps/fréquence.

Les symboles de préambule (en anglais « preamble ») sont placés en début de trame. Grâce à ce(s) symbole(s) de préambule, le canal de transmission est estimé sur chacune des porteuses du multiplex. Le choix des paramètres du système (durée symbole, longueur de trame, etc...) assure que le canal varie lentement par rapport au temps symbole. On le suppose alors quasi-constant sur une trame. On peut donc utiliser l'estimée du canal sur le(s) symbole(s) de préambule pour l'ensemble des symboles multiporteuses de la trame. Ce type d'estimation est valable pour la transmission filaire (DSL, PLC) et aussi pour les canaux sans fil de type WLAN (IEEE802.11a/g) ou WRAN (IEEE802.22).

On peut noter que ces symboles de préambule peuvent être insérés dans le signal avant l'étape de modulation, ou bien en sortie de l'étape de modulation.

Comme en OFDM classique, les échantillons temporels correspondant aux symboles de préambule et aux symboles utiles peuvent être transmis avant l'étape d'insertion d'un intervalle de garde 42. Dans ce cas, l'estimation du canal de transmission, en réception, se fait suivant le principe OFDM classique.

Cependant, des techniques d'estimations spécifiques aux modulations avancées ont été développées, permettant d'obtenir une meilleure estimation de canal que celle obtenue en suivant le principe OFDM classique.

Ces techniques dites « IAM » (en anglais « Interference Approximation Method ») sont notamment décrites dans les demandes de brevet W02008/007019 et W02008/00730 mentionnées précédemment. Ces techniques permettent une meilleure estimation du canal de transmission à partir des symboles de préambule.

Ainsi, selon ce mode de réalisation de l'invention, on n'insère un intervalle de garde 42 que devant les symboles utiles. Ainsi, les symboles de préambule P, représentés en pointillés sur la figure 4, transitent directement par le canal de transmission 43, selon un mode OFDM/OQAM classique, c'est-à-dire sans intervalle de garde. Ceci permet en réception de réaliser une estimation de canal avec les techniques OFDM/OQAM.

En d'autres termes, on sépare les échantillons temporels correspondant aux symboles utiles et des échantillons temporels correspondant aux symboles de préambule. Les échantillons temporels correspondant aux symboles de préambule sont transmis suivant le mode OFDM/OQAM classique, c'est-à-dire sans ajout d'intervalle de garde, alors que les échantillons temporels correspondant aux symboles utiles suivent le mode de transmission OFDM/OQAM avec intervalle de garde.

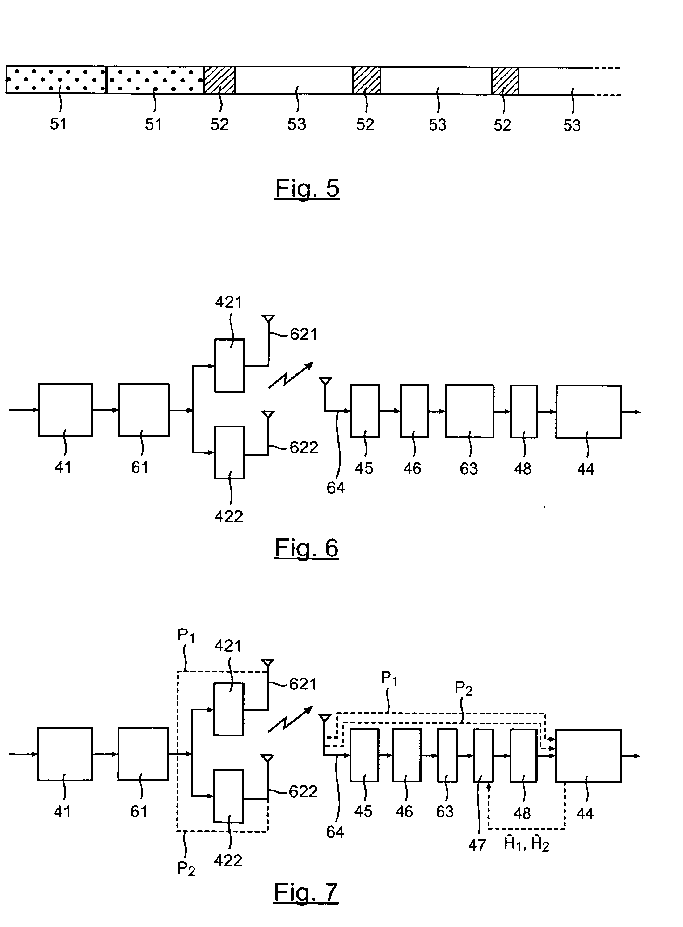

La figure 5 illustre un exemple de trame du signal multiporteuse transmis selon ce mode de réalisation particulier de l'invention. Une telle trame comprend un ou plusieurs symboles de préambule (par exemple deux symboles de préambule 51), et des symboles utiles 53. Ces symboles utiles 53 sont chacun précédés d'un intervalle de garde 52.

Ainsi :

- à un instant $t$, le premier symbole de préambule 51 est émis, puis
- à un instant $t + T_0$, le deuxième symbole de préambule 51 est émis, puis
- à un instant $t + 2T_0$, le premier symbole utile 53 accompagné de l'intervalle de garde 52 est émis, puis
- à un instant $t + 3T_0$, le deuxième symbole utile 53 accompagné de l'intervalle de garde 52 est émis,
- etc.

Une telle solution permet d'une part de garder le gain de l'estimation de canal OFDM/OQAM, et d'autre part de transmettre des données avec intervalle de garde pour une plus grande résistance à l'étalement du canal.

Après passage dans le canal de transmission 43, les échantillons temporels correspondant aux symboles de préambule P du signal multiporteuse sont directement transmis au démodulateur 44 pour estimer le canal de transmission.

L'estimation du canal grâce aux symboles de préambule permet de combiner la technique dite IAM, qui consiste à utiliser de manière constructive l'interférence entre symboles (IES) générée par l'OFDM/OQAM, et l'estimation par paires de pilotes réels et/ou imaginaires, telle que décrite dans les demandes de brevet W02008/007019 et W02008/00730 précitées.

Après suppression de l'intervalle de garde 45, les échantillons temporels correspondant aux symboles utiles (symboles de données utiles et éventuellement pilotes) sont égalisés, en mettant en oeuvre une transformée de Fourier rapide (FFT) 46, puis une égalisation 47 tenant compte de l'estimation du canal de transmission $\hat{H}$, puis une FFT inverse 48 avant d'entrer dans le démodulateur 44. L'égalisation à un coefficient et l'estimation de canal sont donc réalisés séparément dans le domaine fréquentiel.

En particulier, si les symboles utiles portent des pilotes, les échantillons temporels correspondant aux symboles utiles sont transmis au démodulateur 44 pour réaliser une deuxième estimation de canal, avant les étapes de FFT 46, égalisation 47 et FFT inverse 48.

Par exemple, cette estimation du canal met en oeuvre la technique de la couronne, telle que décrite dans le brevet EP 1 319 293.

Le démodulateur 44 permet notamment d'estimer les données transmises.

Ainsi, ce mode de réalisation, le fonctionnement du démodulateur 44 est classique, mais l'égalisation, qui reste du type ZF à un coefficient par sous-porteuse, s'effectue avant la démodulation 44.

Pour obtenir de meilleures performances dans le cas d'une estimation par préambule, il est préférable d'utiliser un filtre prototype de longueur limitée à $T_0$. Pour des prototypes plus longs, il est possible de prolonger le préambule par autant de zéros que nécessaire (c'est-à-dire par des symboles multiporteuses nuls).

Une autre possibilité consiste à ajouter les symboles de préambule en sortie du modulateur. Dans ce cas, les symboles de préambule et les symboles utiles sont traités de la même façon, c'est-à-dire qu'un intervalle de garde est inséré devant chaque symbole multiporteuse, que ce soit un symbole de préambule ou un symbole utile.

*5.3 Application aux systèmes mitlti-antenties*

La figure 6 illustre une application de la technique selon l'invention aux systèmes multi-antennes. En effet, l'utilisation d'un intervalle de garde permet de supprimer, ou au moins de réduire, l'interférence entre symboles, et peut donc s'étendre aux systèmes multi-antennes.

Dans ce cas, l'étape d'insertion d'un intervalle de garde 421, 422 est mise en oeuvre pour chacune des antennes d'émission 621, 622.

Le système multi-antennes illustré en figure 6 comprend deux antennes d'émission 621 et 622, et une antenne de réception 64. Bien entendu, l'invention s'applique à un nombre différent d'antennes, et en particulier à un système comprenant deux antennes d'émission et deux antennes de réception.

Plus précisément, après l'étape de modulation 41, le signal modulé subit un codage espace/temps 61, permettant de répartir les symboles multiporteuses du signal modulé sur les différentes antennes d'émission 621 et 622. Un tel codage permet notamment d'accroître la robustesse de transmission.

Dans le cadre d'une modulation avancée de type OFDM/OQAM par exemple, la condition d'orthogonalité n'est vérifiée que dans le corps des réels, ce qui ne permet pas d'utiliser les schémas de codage classiques d'Alamouti.

On propose donc selon l'invention d'appliquer le codage espace/temps en sortie de l'étape de modulation 41, de façon à travailler sur des valeurs complexes.

Par exemple, l'étape de codage espace/temps met en oeuvre une matrice de codage basée sur un schéma de codage de type Alamouti, telle que :

$$S = \begin{bmatrix} s_1 & s_2 \\ s_1' & s_2' \end{bmatrix}$$

où :

$s_1$ et $s_2$ sont les vecteurs symboles correspondant aux échantillons temporels transmis à l'instant $T_0$ sur une première antenne d'émission 621 et une deuxième antenne d'émission 622 respectivement ;

$s_1$' et $s_2$' sont les vecteurs symboles correspondant aux échantillons temporels transmis à l'instant $2T_0$ sur la première antenne d'émission 621 et la deuxième antenne d'émission 622 respectivement, avec :

-

$$s_1'[k] = s_2 *[M - 1 - k] \; ;$$

-

$$s_2'[k] = -s_1 *[M - 1 - k].$$

Ce schéma de codage permet de satisfaire les conditions d'orthogonalité, c'est-à-dire de conserver les distances entre les symboles multiporteuses transmis, ce qui permet d'optimiser les performances.

Selon un premier exemple de réalisation, les échantillons temporels correspondant aux symboles utiles et les échantillons temporels correspondant aux symboles de préambule, s'ils existent, subissent le même traitement. Autrement dit, un intervalle de garde est inséré devant ces symboles multiporteuses avant émission, que ce soit des symboles de préambule ou des symboles utiles.

En particulier, pour obtenir de meilleures performances dans le cas d'une estimation par préambule, il est préférable d'utiliser un filtre prototype de longueur limitée à $\frac{3}{2}T_0$. Pour des prototypes plus longs, il est possible de prolonger le préambule par autant de zéros que nécessaire (c'est-à-dire par des symboles multiporteuses nuls).

Selon un deuxième exemple de réalisation, les symboles de préambule sont insérés après le modulateur 41, après le codage espace/temps 61. Dans ce cas, les symboles de préambule et les symboles utiles sont traités de la même façon, c'est-à-dire qu'un intervalle de garde est inséré devant chaque symbole multiporteuse, que ce soit un symbole de préambule ou un symbole utile. Du fait de la présence de deux antennes d'émission 621 et 622, deux canaux de transmission sont à estimer, et il est donc souhaitable de doubler la durée du préambule. En particulier, du fait de l'allongement de la durée du préambule, il existe des contraintes sur la longueur du prototype utilisé.

Selon un troisième exemple, illustré en figure 7, on sépare les échantillons temporels correspondant aux symboles utiles et des échantillons temporels correspondant aux symboles de préambule. Du fait de la présence de deux canaux de transmission, il est souhaitable de doubler la durée du préambule. Les symboles de préambule sont donc répartis en deux sous-ensembles $P_1$ et $P_2$ lors de l'étape de codage espace/temps 61.

Les échantillons temporels correspondant aux symboles de préambule $P_1$ et $P_1$ représentés en pointillés sur la figure 7, sont transmis sans ajout d'intervalle de garde, alors que les échantillons temporels correspondant aux symboles utiles sont transmis avec intervalle de garde.

De nouveau, pour obtenir de meilleures performances dans le cas d'une estimation par préambule, il est préférable d'utiliser un filtre prototype de longueur limitée à $T_0$. Pour des prototypes plus longs, il est possible de prolonger le préambule par autant de zéros que nécessaire (c'est-à-dire par des symboles multiporteuses nuls).

Côté réception, les étapes précédemment décrites en relation avec la figure 4 sont mises en oeuvre :

- suppression 45 de l'intervalle de garde ;
- démodulation 44 du signal modulé.

Avant démodulation 44, le signal est décodé dans un module de décodage espace/temps 63, mettant en oeuvre un traitement inverse à un codage espace/temps effectué en émission.

Si le canal n'est pas parfait, les symboles de préambule peuvent être utilisés pour estimer les canaux de transmission $\hat{H}_1$ et $\hat{H}_2$, correspondant au canal de transmission entre la première antenne d'émission 621 et l'antenne de réception 64, et au canal de transmission entre la deuxième antenne d'émission 622 et l'antenne de réception 64.

Ainsi, selon le troisième exemple illustré en figure 7, après passage dans les canaux de transmission, les échantillons temporels correspondant aux symboles de préambule $P_1$ et $P_2$ du signal multiporteuse sont directement transmis au démodulateur 44 pour estimation des canaux.

Après suppression de l'intervalle de garde 45, les échantillons temporels correspondant aux symboles utiles (symboles de données utiles et éventuellement pilotes) sont égalisés 47, en tenant compte de l'estimation des canaux de transmission $\hat{H}_1$ et $\hat{H}_2$.

Ainsi, si le modulateur 41 met en oeuvre une modulation avancée de type OFDM/OQAM, le gain attendu est celui lié à la méthode d'estimation de canal utilisée pour l'OFDM/OQAM.

*5.4 Performances de l'invention*

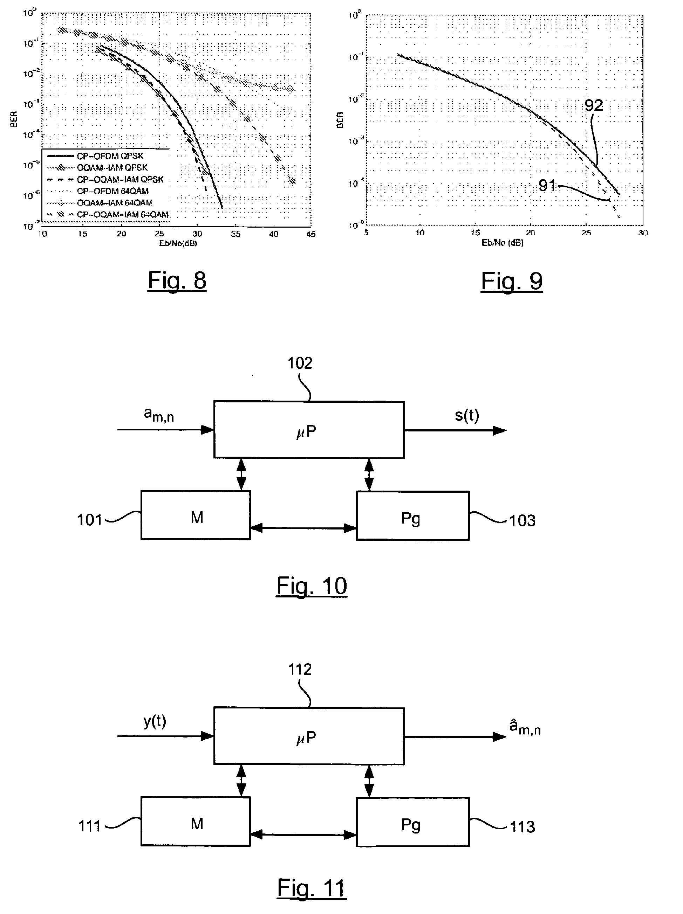

On présente désormais, en relation avec les figures 8 et 9, les performances de l'invention par rapport à l'art antérieur dans un système SISO (figure 8) ou MISO (figure 9). Ces courbes illustrent le taux d'erreur binaire (BER) en fonction du rapport Eb/N0 en dB.

Plus précisément, on considère le canal Zimmermann PLC et une estimation parfaite du canal de transmission pour comparer la solution de l'invention, basée sur une modulation OFDM/OQAM, par rapport aux solutions de l'art antérieur, c'est-à-dire à l'OFDM classique avec intervalle de garde.

Les paramètres de simulation sont :

- fréquence d'échantillonnage : 10 MHz, taille FFT 128, longueur de l'intervalle de garde : 10 échantillons (1 $\mu s$) ;
- constellation : QPSK ou 64-QAM ;
- profil d'amplitude en linéaire : 0:2, 0:1, 0:02, 0:01 ;
- profil de délais ($\mu s$) : 0, 0:4, 0:6, 0:7 ;
- pour la modulation OFDM/OQAM, la fonction prototype est la fonction OptLoc, dont la durée est limitée ici à $T_0$.

En estimation parfaite, les performances de la technique selon l'invention et de la technique OFDM classique avec intervalle de garde sont les mêmes, les deux techniques utilisant un intervalle de garde de même longueur.

En revanche, comme illustré en figure 8, la variante de l'invention selon laquelle on insère un intervalle de garde devant les symboles utiles uniquement, notée CP-OQAM-IAM (QPSK ou 64QAM selon la constellation utilisée), donne de meilleures performances que la technique OFDM classique avec intervalle de garde, notée CP-OFDM (QPSK ou 64QAM selon la constellation utilisée), grâce au gain obtenu par la méthode d'estimation adaptée aux modulations OFDM/OQAM.

De plus, la technique CP-OQAM-IAM élimine le problème de palier présent dans la méthode OQAM-IAM (QPSK ou 64QAM selon la constellation utilisée), correspondant aux techniques classiques d'OFDM/OQAM sans intervalle de garde.

Les performances sont également améliorées dans le cadre d'un système multi-antennes mettant en oeuvre deux antennes d'émission et une seule antenne de réception, comme illustré en figure 9.

Par exemple, si l'on suppose de nouveau une connaissance parfaite du canal, et des paramètres de simulations similaires aux précédents à l'exception des suivants :

- longueur de l'intervalle de garde égale à la taille de la FFT divisée par 4 ;
- constellation : QPSK ;
- profil d'amplitude du premier canal de transmission, correspondant au canal entre la première antenne d'émission et l'antenne de réception, en linéaire : 0:2, 0:1, 0:02, 0:01 ;
- profil de délais du premier canal ($\mu s$) : 0, 0:4, 0:6, 0:7 ;
- profil d'amplitude du deuxième canal de transmission, correspondant au canal entre la deuxième antenne d'émission et l'antenne de réception, en linéaire : 0:5, 0:2,0:3,0:1,0:02 ;
- profil de délais du deuxième canal ($\mu s$) : 0, 0:4, 0:6, 0:9, 1:1 ;
- pour la modulation OFDM/OQAM, la fonction prototype est la fonction IOTA de longueur $4T_0$ ;

on constate que la technique selon l'invention en OFDM/OQAM mettant en oeuvre un schéma de codage de type Alamouti, représentée en courbe 91, présente de meilleures performances que la technique de l'art antérieur en OFDM mettant en oeuvre un schéma de codage Alamouti classique, représentée en courbe 92, avec des hypothèses similaires à celles de l'OFDM, c'est-à-dire un canal plat sur un temps symbole.

L'invention propose ainsi une nouvelle technique de modulation distincte de l'OFDM classique avec intervalle de garde, permettant de limiter les interférences entre symboles. Ainsi, la technique proposée peut être utilisée dans les réseaux de diffusion DVB, notamment pour le mode de diffusion SFN, selon lequel les retards introduits par le canal sont très élevés.

L'invention permet ainsi, selon au moins un de ses modes de réalisation :

- de conserver le gain des modulations avancées sur les modulations OFDM classiques, y compris pour les grandes valeurs de SNR, grâce à l'ajout d'un intervalle de garde en émission ;
- d'améliorer les performances en combinant les techniques d'estimation de canal des modulations avancées, et l'utilisation d'un intervalle de garde, ceci avec une implémentation appropriée du récepteur ;
- de mettre en oeuvre une chaîne Alamouti 2 x 1 (MISO) avec un modulateur avancé, comme un modulateur OFDM/ OQAM ou BFDM/OQAM.

*5.5 Structure des dispositifs d'émission et de réception*

On présente finalement, en relation avec les figures 10 et 11, la structure simplifiée d'un dispositif d'émission et d'un dispositif de réception mettant respectivement en oeuvre une technique de transmission et une technique de réception selon le mode de réalisation particulier décrit ci-dessus.

Un tel dispositif d'émission comprend une mémoire 101 constituée d'une mémoire tampon, une unité de traitement 102, équipée par exemple d'un microprocesseur $\mu$P, et pilotée par le programme d'ordinateur 103, mettant en oeuvre le procédé de transmission selon l'invention.

A l'initialisation, les instructions de code du programme d'ordinateur 103 sont par exemple chargées dans une mémoire RAM avant d'être exécutées par le processeur de l'unité de traitement 102. L'unité de traitement 102 reçoit en entrée des symboles de données, à valeur réelle ou complexe. Le microprocesseur de l'unité de traitement 102 met en oeuvre les étapes du procédé de transmission décrit précédemment, selon les instructions du programme d'ordinateur 103, pour générer le signal multiporteuse s(t). Pour cela, le dispositif d'émission comprend, outre la mémoire tampon 101, des moyens de modulation des symboles de données, et des moyens d'insertion d'un intervalle de garde devant au moins un symbole multiporteuse du signal modulé. Ces moyens sont pilotés par le microprocesseur de l'unité de traitement 102.

Le dispositif de réception comprend une mémoire 111 constituée d'une mémoire tampon, une unité de traitement 112, équipée par exemple d'un microprocesseur $\mu$P, et pilotée par le programme d'ordinateur 113, mettant en oeuvre le procédé de réception selon l'invention.

A l'initialisation, les instructions de code du programme d'ordinateur 113 sont par exemple chargées dans une mémoire RAM avant d'être exécutées par le processeur de l'unité de traitement 112. L'unité de traitement 112 reçoit en entrée un signal *y(t)*, correspondant au signal multiporteuse s(t) après passage dans le canal de transmission. Ce signal *y(t)* est formé d'une succession temporelle de symboles multiporteuses, au moins un symbole multiporteuse étant précédé d'un intervalle de garde. Le microprocesseur de l'unité de traitement 112 met en oeuvre les étapes du procédé de réception décrit précédemment, selon les instructions du programme d'ordinateur 113, pour estimer les données transmises. Pour cela, le dispositif de réception comprend, outre la mémoire tampon 111, des moyens de suppression dudit intervalle de garde, délivrant ledit signal modulé, et des moyens de démodulation dudit signal modulé. Ces moyens sont pilotés par le microprocesseur de l'unité de traitement 112.

**Revendications**

1. Procédé de transmission d'un signal multiporteuse, mettant en oeuvre une étape de modulation (21) de symboles de données représentatifs d'un signal de données à transmettre,
   ladite étape de modulation (21) comprenant un filtrage par au moins une fonction prototype mettant en oeuvre au moins deux coefficients de filtrage distincts, délivrant un signal modulé constitué d'une succession temporelle de symboles multiporteuses,

**caractérisé en ce que** ledit procédé comprend une étape d'insertion (22) d'un intervalle de garde devant au moins un symbole multiporteuse dudit signal modulé, délivrant ledit signal multiporteuse.

2. Procédé de transmission selon la revendication 1, **caractérisé en ce que** ledit intervalle de garde présente une longueur inférieure ou égale à l'étalement des retards dans un canal de transmission dudit signal multiporteuse.

3. Procédé de transmission selon l'une quelconque des revendications 1 et 2, **caractérisé en ce que** lesdits symboles multiporteuses comprennent des symboles de préambule (51) constitués de pilotes, dont la valeur et/ou l'emplacement à l'émission sont connus d'au moins un récepteur destiné à effectuer une réception dudit signal multiporteuse, et des symboles utiles (53),
et **en ce que** ladite étape d'insertion (22) insère un intervalle de garde (52) uniquement devant l'un au moins desdits symboles utiles (53) .

4. Procédé de transmission selon la revendication 3, **caractérisé en ce que** lesdits symboles de préambule (51) sont transmis préalablement audit intervalle de garde (52) et auxdits symboles utiles (53).

5. Procédé de transmission selon l'une quelconque des revendications 1 à 4, **caractérisé en ce qu'**il met en oeuvre au moins deux antennes d'émission (621, 622), et **en ce que** ladite étape d'insertion (22) d'un intervalle de garde est mise en oeuvre pour chacune desdites antennes d'émission.

6. Procédé de transmission selon la revendication 5, **caractérisé en ce qu'**il comprend une étape de codage espace/temps appliquée audit signal modulé, mettant en oeuvre une matrice de codage basée sur un schéma de codage de type Alamouti, telle que :

$$S = \begin{bmatrix} s_1 & s_2 \\ s_1{}' & s_2{}' \end{bmatrix}$$

où :

$s_1$ et $s_2$ sont les vecteurs symboles correspondant aux échantillons temporels transmis à l'instant t sur une première et une deuxième antenne d'émission respectivement ;
$s_1$' et $s_2$' sont les vecteurs symboles correspondant aux échantillons temporels transmis à l'instant $t$ + Ts sur la première et la deuxième antenne d'émission respectivement, avec :

-

$$s_1{}'[k] = s_2{}^*[M - 1 - k] \ ;$$

-

$$s_2{}'[k] = -s_1{}^*[M - 1 - k] \ ;$$

- M le nombre de porteuses d'un symbole multiporteuse du signal multiporteuse ;
- Ts la durée d'un symbole multiporteuse du signal multiporteuse ;
- k l'indice de l'échantillon temporel ; et
- * l'opérateur transposé conjugué.

7. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon l'une au moins des revendications 1 à 6.

8. Dispositif d'émission d'un signal multiporteuse comprenant des moyens de modulation (21) de symboles de données représentatifs d'un signal de données à transmettre, comprenant un filtrage par au moins une fonction prototype mettant en oeuvre au moins deux coefficients de filtrage distincts, délivrant un signal modulé constitué d'une succession temporelle de symboles multiporteuses, **caractérisé en ce que** ledit dispositif comprend des moyens d'insertion (22) d'un intervalle de garde devant au moins un symbole multiporteuse dudit signal modulé, délivrant ledit signal multiporteuse.

**9.** Procédé de réception d'un signal multiporteuse formé d'une succession temporelle de symboles multiporteuses, au moins un symbole multiporteuse étant précédé d'un intervalle de garde, **caractérisé en ce qu'**il comprend les étapes suivantes :

- suppression (31) dudit intervalle de garde, délivrant ledit signal modulé,
- démodulation (32) dudit signal modulé, comprenant un filtrage par au moins une fonction prototype mettant en oeuvre au moins deux coefficients de filtrage distincts.

**10.** Procédé de réception selon la revendication 9, **caractérisé en ce que** lesdits symboles multiporteuses comprennent des symboles de préambule constitués de pilotes, dont la valeur et/ou l'emplacement à l'émission sont connus d'au moins un récepteur mettant en oeuvre ledit procédé, et des symboles utiles,
et **en ce que** ledit procédé comprend les étapes suivantes :

- extraction desdits symboles de préambule, préalablement à ladite étape de suppression d'un intervalle de garde,
- estimation d'un canal de transmission dudit signal multiporteuse à partir desdits symboles de préambule,
- égalisation dudit signal modulé, préalablement à ladite étape de démodulation, tenant compte de ladite estimation du canal de transmission.

**11.** Procédé de réception selon l'une quelconque des revendications 9 et 10, **caractérisé en ce qu'**il met en oeuvre une étape de décodage espace/temps, mettant en oeuvre un traitement inverse à un codage espace/temps effectué en émission.

**12.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 9 à 11.

**13.** Dispositif de réception d'un signal multiporteuse formé d'une succession temporelle de symboles multiporteuses, au moins un symbole multiporteuse étant précédé d'un intervalle de garde,
**caractérisé en ce qu'**il comprend :

- des moyens de suppression (31) dudit intervalle de garde, délivrant ledit signal modulé,
- des moyens de démodulation (32) dudit signal modulé, comprenant un filtrage par au moins une fonction prototype mettant en oeuvre au moins deux coefficients de filtrage distincts.

**14.** Signal multiporteuse formé d'une succession temporelle de symboles multiporteuses,
obtenus après une étape de modulation de symboles de données représentatifs d'un signal de données à transmettre, comprenant un filtrage par au moins une fonction prototype mettant en oeuvre au moins deux coefficients de filtrage distincts,
**caractérisé en ce qu'**au moins un desdits symboles multiporteuses est précédé d'un intervalle de garde (52).

**15.** Signal multiporteuse selon la revendication 14, **caractérisé en ce que** lesdits symboles multiporteuses comprennent des symboles de préambule (51) constitués de pilotes, dont la valeur et/ou l'emplacement à l'émission sont connus d'au moins un récepteur destiné à effectuer une réception dudit signal multiporteuse, et des symboles utiles (53), et **en ce qu'**uniquement l'un au moins desdits symboles utiles (53) est précédé d'un intervalle de garde (52).

**Claims**

**1.** Method for transmitting a multicarrier signal, implementing a step (21) of modulating data symbols representative of a data signal to be transmitted,
said modulation step (21) comprising a filtering by at least one prototype function implementing at least two distinct filtering coefficients, delivering a modulated signal consisting of a temporal succession of multicarrier symbols, **characterized in that** said method comprises a step (22) of inserting a guard interval in front of at least one multicarrier symbol of said modulated signal, delivering said multicarrier signal.

2. Transmission method according to Claim 1, **characterized in that** said guard interval exhibits a length which is less than or equal to the spreading of the delays in a transmission channel for said multicarrier signal.

3. Transmission method according to any one of Claims 1 and 2, **characterized in that** said multicarrier symbols comprise preamble symbols (51) consisting of pilots, whose value and/or location on emission are known to at least one receiver intended to perform a reception of said multicarrier signal, and useful symbols (53), and **in that** said insertion step (22) inserts a guard interval (52) only in front of at least one of said useful symbols (53).

4. Transmission method according to Claim 3, **characterized in that** said preamble symbols (51) are transmitted prior to said guard interval (52) and to said useful symbols (53).

5. Transmission method according to any one of Claims 1 to 4, **characterized in that** it implements at least two transmit antennas (621, 622), and **in that** said step (22) of inserting a guard interval is implemented for each of said transmit antennas.

6. Transmission method according to Claim 5, **characterized in that** it comprises a space/time coding step applied to said modulated signal, implementing a coding matrix based on a coding scheme of Alamouti type, such that:

$$S = \begin{bmatrix} s_1 & s_2 \\ s_1{}' & s_2{}' \end{bmatrix}$$

where: $S_1$ and $S_2$ are the symbol vectors corresponding to the temporal samples transmitted at the instant t on a first and a second transmit antenna respectively;
$s_1'$ and $S_2'$ are the symbol vectors corresponding to the temporal samples transmitted at the instant $t$ + Ts on the first and the second transmit antenna respectively,
with:

-

$$s_1{}'[k] = s_2 * [M - 1 - k];$$

-

$$s_2{}'[k] = -s_1 * [M - 1 - k];$$

- M the number of carriers of a multicarrier symbol of the multicarrier signal;
- Ts the duration of a multicarrier symbol of the multicarrier signal;
- k the index of the temporal sample; and
- * the conjugate transpose operator.

7. Computer program product downloadable from a communication network and/or recorded on a medium readable by computer and/or executable by a processor, **characterized in that** it comprises program code instructions for the implementation of the transmission method according to at least one of Claims 1 to 6.

8. Device for emitting a multicarrier signal comprising means (21) for modulating data symbols representative of a data signal to be transmitted, comprising a filtering by at least one prototype function implementing at least two distinct filtering coefficients, delivering a modulated signal consisting of a temporal succession of multicarrier symbols, **characterized in that** said device comprises means (22) for inserting a guard interval in front of at least one multicarrier symbol of said modulated signal, delivering said multicarrier signal.

**9.** Method for receiving a multicarrier signal formed of a temporal succession of multicarrier symbols, at least one multicarrier symbol being preceded by a guard interval, **characterized in that** it comprises the following steps:

- deletion (31) of said guard interval, delivering said modulated signal,
- demodulation (32) of said modulated signal, comprising a filtering by at least one prototype function implementing at least two distinct filtering coefficients.

**10.** Reception method according to Claim 9, **characterized in that** said multicarrier symbols comprise preamble symbols consisting of pilots, whose value and/or location on emission are known to at least one receiver implementing said method, and useful symbols,
and **in that** said method comprises the following steps:

- extraction of said preamble symbols, prior to said step of deleting a guard interval,
- estimation of a transmission channel for said multicarrier signal on the basis of said preamble symbols,
- equalization of said modulated signal, prior to said demodulation step, taking account of said estimation of the transmission channel.

**11.** Reception method according to any one of Claims 9 and 10, **characterized in that** it implements a space/time decoding step, implementing a processing inverse to a space/time coding performed on emission.

**12.** Computer program product downloadable from a communication network and/or recorded on a medium readable by computer and/or executable by a processor, **characterized in that** it comprises program code instructions for the implementation of the reception method according to at least one of Claims 9 to 11.

**13.** Device for receiving a multicarrier signal formed of a temporal succession of multicarrier symbols, at least one multicarrier symbol being preceded by a guard interval, **characterized in that** it comprises:

- means (31) for deleting said guard interval, delivering said modulated signal,
- means (32) for demodulating said modulated signal, comprising a filtering by at least one prototype function implementing at least two distinct filtering coefficients.

**14.** Multicarrier signal formed of a temporal succession of multicarrier symbols, obtained after a step of modulating data symbols representative of a data signal to be transmitted, comprising a filtering by at least one prototype function implementing at least two distinct filtering coefficients, **characterized in that** at least one of said multicarrier symbols is preceded by a guard interval (52).

**15.** Multicarrier signal according to Claim 14, **characterized in that** said multicarrier symbols comprise preamble symbols (51) consisting of pilots, whose value and/or location on emission are known to at least one receiver intended to perform a reception of said multicarrier signal, and useful symbols (53),
and **in that** only at least one of said useful symbols (53) is preceded by a guard interval (52).

**Patentansprüche**

**1.** Verfahren zur Übertragung eines Mehrträgersignals, das einen Schritt (21) der Modulation von Datensymbolen durchführt, die für ein zu übertragendes Datensignal repräsentativ sind, wobei der Modulationsschritt (21) eine Filterung durch mindestens eine Prototyp-Funktion enthält, die mindestens zwei unterschiedliche Filterkoeffizienten anwendet., und ein aus einer zeitlichen Folge von Mehrträgersymbolen bestehendes moduliertes Signal liefert, **dadurch gekennzeichnet, dass** das Verfahren einen Schritt (22) des Einfügens eines Schutzintervalls vor mindestens einem Mehrträgersymbol des modulierten Signals enthält, der das Mehrträgersignal liefert.

**2.** Übertragungsverfahren nach Anspruch 1, **dadurch gekennzeichnet, dass** das Schutzintervall eine Länge geringer als oder gleich der Ausbreitung der Verzögerungen in einem Übertragungskanal des Mehrträgersignals aufweist.

**3.** Übertragungsverfahren nach einem der Ansprüche 1 und 2, **dadurch gekennzeichnet, dass** die Mehrträgersymbole aus Pilotsymbolen bestehende Präambelsymbole (51), deren Wert und/oder Stelle beim Senden mindestens einem Empfänger bekannt sind, der dazu bestimmt ist, einen Empfang des Mehrträgersignals durchzuführen, und Nutzsymbole (53) enthalten,
und dass der Einfügeschritt (22) ein Schutzintervall (52) nur vor mindestens eines der Nutzsymbole (53) einfügt.

4. Übertragungsverfahren nach Anspruch 3, **dadurch gekennzeichnet, dass** die Präambelsymbole (51) vor dem Schutzintervall (52) und den Nutzsymbolen (53) übertragen werden.

5. Übertragungsverfahren nach einem der Ansprüche 1 bis 4, **dadurch gekennzeichnet, dass** es mindestens zwei Sendeantennen (621, 622) verwendet, und dass der Schritt (22) des Einfügens eines Schutzintervalls für jede der Sendeantennen durchgeführt wird.

6. Übertragungsverfahren nach Anspruch 5, **dadurch gekennzeichnet, dass** es einen an das modulierte Signal angewendeten Schritt der Raum/Zeitcodierung enthält, der eine Codiermatrix verwendet, die auf einem Codierschema vom Typ Alamouti basiert, derart, dass gilt:

$$S = \begin{bmatrix} s_1\ s_2 \\ s_1'\ s_2' \end{bmatrix}$$

wobei:

$s_1$ und $s_2$ die Symbolvektoren sind, die den Zeitproben entsprechen, die zum Zeitpunkt t auf einer ersten bzw. einer zweiten Sendeantenne übertragen werden;
$s_1'$ und $s_2'$ die Symbolvektoren sind, die den Zeitproben entsprechen, die zum Zeitpunkt t + Ts auf der ersten bzw. der zweiten Sendeantenne übertragen werden, mit:

-

$$s_1'[k] = s_2*[M-1-k]$$

-

$$s_2'[k] = -s_1*[M-1-k]$$

- M der Anzahl von Trägerwellen eines Mehrträgersymbols des Mehrträgersignals;
- Ts der Dauer eines Mehrträgersymbols des Mehrträgersignals;
- k dem Index der Zeitprobe; und
- * dem transponierten-konjugierten Operator.

7. Computerprogrammprodukt, das von einem Kommunikationsnetzwerk heruntergeladen und/oder auf einem computerlesbaren Träger gespeichert und/oder von einem Prozessor ausgeführt werden kann, **dadurch gekennzeichnet, dass** es Programmcodeanweisungen zur Durchführung des Übertragungsverfahrens nach mindestens einem der Ansprüche 1 bis 6 enthält.

8. Sendevorrichtung eines Mehrträgersignals, die Modulationseinrichtungen (21) von für ein zu übertragendes Datensignal repräsentativen Datensymbolen enthält, die eine Filterung durch mindestens eine Prototyp-Funktion enthalten, die mindestens zwei unterschiedliche Filterkoeffizienten anwendet, die ein moduliertes Signal liefern, das aus einer zeitlichen Folge von Mehrträgersymbolen besteht,
**dadurch gekennzeichnet, dass** die Vorrichtung Einfügeeinrichtungen (22) eines Schutzintervalls vor mindestens ein Mehrträgersymbol des gesendeten Signals enthält, die das Mehrträgersignal liefern.

9. Empfangsverfahren eines Mehrträgersignals, das von einer zeitlichen Folge von Mehrträgersymbolen geformt wird, wobei vor mindestens einem Mehrträgersymbol ein Schutzintervall liegt, **dadurch gekennzeichnet, dass** es die folgenden Schritte enthält:

   - Beseitigung (31) des Schutzintervalls, die das modulierte Signal liefert,
   - Demodulation (32) des modulierten Signals, die eine Filterung durch mindestens eine Prototyp-Funktion enthält, die mindestens zwei verschiedene Filterkoeffizienten anwendet.

10. Empfangsverfahren nach Anspruch 9, **dadurch gekennzeichnet, dass** die Mehrträgersymbole aus Pilotsymbolen bestehende Präambelsymbole, deren Wert und/oder Stelle beim Senden mindestens einem Empfänger bekannt sind, der das Verfahren durchführt, und Nutzsymbole enthalten, und dass das Verfahren die folgenden Schritte enthält:

   - Entnahme der Präambelsymbole vor dem Schritt der Beseitigung eines Schutzintervalls,
   - Schätzung eines Übertragungskanals des Mehrträgersignals ausgehend von den Präambelsymbolen,
   - Entzerrung des modulierten Signals vor dem Demodulationsschritt unter Berücksichtigung der Schätzung des Übertragungskanals.

11. Empfangsverfahren nach einem der Ansprüche 9 und 10, **dadurch gekennzeichnet, dass** es einen Schritt der Raum-/Zeit-Decodierung durchführt, der eine inverse Verarbeitung zu einer Raum-/Zeit-Codierung durchführt, die beim Senden ausgeführt wird.

12. Computerprogrammprodukt, das von einem Kommunikationsnetzwerk heruntergeladen und/oder auf einem computerlesbaren Träger gespeichert und/oder von einem Prozessor ausgeführt werden kann, **dadurch gekennzeichnet, dass** es Programmcodeanweisungen zur Durchführung des Empfangsverfahrens nach mindestens einem der Ansprüche 9 bis 11 enthält.

13. Empfangsvorrichtung eines von einer zeitlichen Folge von Mehrträgersymbolen geformten Mehrträgersignals, wobei vor mindestens einem Mehrträgersymbol ein Schutzintervall liegt, **dadurch gekennzeichnet, dass** sie enthält:

   - Beseitigungseinrichtungen (31) des Schutzintervalls, die das modulierte Signal liefern,
   - Demodulationseinrichtungen (32) des modulierten Signals, die eine Filterung durch mindestens eine Prototyp-Funktion enthalten, die mindestens zwei unterschiedliche Filterkoeffizienten anwendet.

14. Mehrträgersignal, das von einer zeitlichen Folge von Mehrträgersymbolen geformt wird, die nach einem Modulationsschritt von für ein zu übertragendes Datensignal repräsentativen Datensymbolen erhalten werden, der eine Filterung durch mindestens eine Prototyp-Funktion enthält, die mindestens zwei unterschiedliche Filterkoeffizienten anwendet, **dadurch gekennzeichnet, dass** vor mindestens einem der Mehrträgersymbole ein Schutzintervall (52) liegt.

15. Mehrträgersignal nach Anspruch 14, **dadurch gekennzeichnet, dass** die Mehrträgersymbole aus Pilotsymbolen bestehende Präambelsymbole (51), deren Wert und/oder Stelle beim Senden mindestens einem Empfänger bekannt sind, der einen Empfang des Mehrträgersignals durchführen soll, und Nutzsymbole (53) enthalten, und dass nur vor mindestens einem der Nutzsymbole (53) ein Schutzintervall (52) liegt.

Fig. 1

Fig. 2

Fig. 3

Fig. 4

Fig. 5

Fig. 6

Fig. 7

Fig. 8

Fig. 9

Fig. 10

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008007019 A
- WO 200800730 A

- EP 1319293 A